# EUROPÄISCHE PATENTSCHRIFT

(11) **EP 0 505 827 B1**
(45) Veröffentlichungstag und Bekanntmachung des Hinweises auf die Patenterteilung: **12.06.1996**
(21) Anmeldenummer: 92104119.0
(22) Anmeldetag: 11.03.1992
(51) Int. Cl.: G01S 13/76, G01S 13/93, G01S 13/91

(54) **Sekundär-Radarsystem**
Secondary radar system
Système de radar secondaire

(30) Priorität: 27.03.1991 DE 4109981
(43) Veröffentlichungstag der Anmeldung: 30.09.1992
(73) Patentinhaber: Alcatel SEL Aktiengesellschaft, D-70435 Stuttgart (DE)
(72) Erfinder: Höfgen, Günter, W-7014 Kornwestheim (DE)
(74) Vertreter: Pechhold, Eberhard, Dipl.-Phys.

(56) Entgegenhaltungen:
- EP-A- 0 016 417
- EP-A- 0 379 756
- US-A- 4 197 536
- "Secondary Surveillance Radar" von Michael C. Stevens, Kapitel 12 und 13; ARTECH HOUSE, INC., 685 Canton Street, Norwood, MA 02062

## Beschreibung

Die Erfindung betrifft ein Sekundär - Radarsystem für den Mode - S - Betrieb gemäß dem Oberbegriff des Patentanspruches 1.

Aufbau und Arbeitsweise derartiger Sekundär - Radarsysteme sind in der ICAO - Spezifikation, Annex 10, Teil 1, Kapitel 3.8.2. festgelegt und z.B. in einem Fachbuch mit dem Titel "Secondary Surveillance Radar" von Michael C. Stevens, Verlag Artech House Inc., Norwood, MA 02062, USA ausführlich beschrieben.

Danach weisen SSR Systeme Bodenstationen und Bordstationen auf.Die Bodenstationen senden Abfragesignale aus, die von einer Bordstation empfangen und nach Ablauf einer vorgegebenen Verzögerungszeit durch ein Antwortsignal erwidert werden, das z.B.Angaben über Höhe, Temperatur und Geschwindigkeit des Luftfahrzeuges, in dem sich die Bordstation - auch Transponder genannt - befindet, enthält. Die Bodenstation ermittelt aus der zwischen dem Absenden des Abfragesignals und dem Empfang des Antwortsignals der Bordstation abgelaufenen Zeit und der empfangenen Höhenangabe den Standort des Luftfahrzeuges. Die Richtungsinformation wird dabei aus der Stellung der scharf bündelnden rotierenden Antenne der Bodenstation abgeleitet.

Der Mode-S-Betrieb ermöglicht gegenüber den schon früher eingeführten SSR - Betriebsweisen A und C eine individuelle Adressierung der Luftfahrzeuge, sowie eine Erhöhung der Datenübertragungskapazität. Im Mode-S-Betrieb senden die Bordstationen mit ihrem Antwortsignal eine für das jeweilige Luftfahrzeug charakteristische Kennung aus, die von der Bodenstation zur Auswertung des Antwortsignals und zur individuellen Adressierung einzelner Luftfahrzeuge bei der Ausgabe von Abfragesignalen benutzt wird. Aus dem zuletzt genannten Fachbuch ist es auch bekannt, daß die Luftfahrzeuge in regelmäßigen Zeitabständen Squittersignale aussenden, die den jeweiligen Luftfahrzeugen zugeordnete Adressen enthalten und so eine Erstakquisition der jeweiligen Luftfahrzeuge und deren individuelle Abfrage durch die Bodenstationen ermöglichen. Schließlich ist aus dem zuletzt genannten Fachbuch ein "Synchro - DABS" genannter, jedoch nicht weiter ausgeführter Vorschlag bekannt, bei dem Bodenstationen und Luftfahrzeuge ihre Abfrage- und Antwortsignale in einem festgelegten Zeitrahmen ausgeben, so daß andere Luftfahrzeuge den Zeitpunkt der Ausgabe eines Antwortsignals eines Luftfahrzeuges kennen und damit dessen Entfernung bestimmen können.

SSR-Systeme, wie oben beschrieben, haben jedoch den Nachteil, daß zwischen Bodenstation und Bordstation immer nur dann Informationen ausgetauscht werden können, wenn die Keule der rotierenden Antenne den Bereich überstreicht, in dem sich das betreffende Luftfahrzeug und damit der betreffende Transponder befindet. Mit zunehmender Luftverkehrsdichte ist das eine unter Umständen sicherheitsrelevante Einschränkung.

Aufgabe der Erfindung ist es, ein SSR-System so zu verbessern, daß eine Übertragung von Informationen zwischen Bodenstation und Bordstation jederzeit möglich ist.

Gelöst wird diese Aufgabe durch ein SSR-System mit der Merkmalskombination des Anspruchs 1. Hierbei ist die Ortung von Funksignale abgebenden Landfahrzeugen von mehreren Empfangsstationen aus für sich bekannt (siehe z.B. EP-A-0379756). Das erfindungsgemäße System hat den Vorteil, daß eine Ortung von Luftfahrzeugen mit Hilfe des Abstandes des Luftfahrzeuges zu wenigstens zwei Bodenstationen und der in den Antwortsignalen enthaltenen Höhenangabe ohne die sonst erforderlichen kostspieligen und anfälligen rotierenden Antennen möglich ist. Wird keine Übermittlung einer Höhenangabe zu einer Bodenstation vorausgesetzt, ist zur genauen Ortung eine dritte Bodenstation erforderlich.

Die Unteransprüche enthalten vorteilhafte Ausgestaltungen der Erfindung. So ermöglicht der in Anspruch 2 angegebene zellulare Aufbau eines Netzes von Bodenstationen eine lückenlose Überwachung des Luftraumes und damit eine erhöhte Sicherheit. Anspruch 3 betrifft die Arbeitsaufteilung der Bodenstationen in einem derartigen zellularen Netz. Eine in Anspruch 4 angegebene Weiterbildung betrifft die Synchronisation der Abfrageeinrichtungen in den Bodenstationen. Gegenstand des Patentanspruchs 5 betrifft Rechenmittel in den Bordstationen, die aus den Ankunftszeiten von im Systemzeitrahmen abgestrahlten Antwortsignalen anderer Luftfahrzeuge ihre jeweilige Entfernung von diesen bestimmen und damit die Gefahr von Kollisionen vermindern.

Eine in Anspruch 6 wiedergegebene Ausgestaltung der Erfindung ermöglicht eine Überprüfung der georteten Position und die Feststellung einer Abweichung der im Bordgerät zwischen Empfang eines Abfragesignals und Aussenden eines Antwortsignals eingehaltenen Verzögerungszeit von einem vorgegebenen festen Wert.

Gemäß Patentanspruch 7 können alle Abfrageeinrichtungen bis auf die, die das Abfragesignal aussendet, reine Empfangseinrichtungen sein oder als solche arbeiten. Dies ist vor allem dann von Vorteil, wenn das SSR-System nach der Erfindung beispielsweise gemäß Patentanspruch 8, etwa im Einflugbereich von Flughäfen, eine genaue Flughöhenmessung ermöglichen soll. Um bei großen Abständen der Abfrageeinrichtungen voneinander die Genauigkeit bei der Messung niedriger Flughöhen zu erhöhen, können hier zusätzlich kostengünstig herzustellende, reine Empfangseinrichtungen in geringerem Abstand zur aktiven Abfrageeinrichtung installiert und für die Höhenmessung vom Boden aus verwendet werden.

Ein Ausführungsbeispiel der Erfindung wird anhand der Figuren 1 bis 4 beschrieben und erläutert. Es zeigen:
- Fig. 1a: Netzwerk von Bodenstationen mit Abfrageeinrichtungen,
- Fig. 1b: charakteristische Entfernungen für aktiven und passiven Betrieb der Abfrageeinrichtungen,
- Fig. 2: Systemarchitektur,
- Fig. 3: Aufbau einer Bodenstation mit Antenne,
- Fig. 4a: Impulsdiagramm mit Vorverlegung der Abfrageimpulse (Pre-Delay); eine Bordstation, mehrere Bodenstationen,
- Fig. 4b: Impulsdiagramme wie 4a, eine Bodenstation, mehrere Bordstationen.

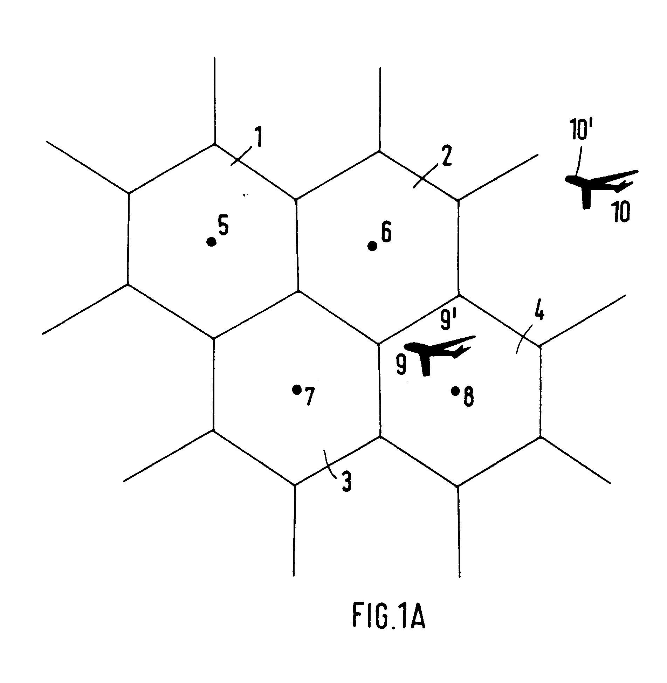

In Fig. 1a, einem Netzwerk von Bodenstationen und Abfrageeinrichtungen, sind mit 1, 2, 3 und 4 hexagonale Zellen eines zellularen Netzwerkes bezeichnet. Das gesamte Netzwerk besteht jedoch aus mehr als vier Zellen, wie durch die offenen Zellen in der Figur angedeutet. Im Mittelpunkt jeder Zelle befindet sich jeweils eine Bodenstation. Die Bodenstationen sind hier mit 5, 6, 7 und 8 bezeichnet. Über dem zellularen Netz von Bodenstationen befinden sich zwei Flugzeuge 9 und 10. Auf dem Flugzeug 9 befindet sich ein mit 9' bezeichneter Transponder, auf dem Flugzeug 10 ein mit 10' bezeichneter. Die Bodenstationen 5, 6, 7 und 8 enthalten Abfrageeinrichtungen, die auf einen hochfrequenten Träger aufmodulierte Abfrageimpulse aussenden. Werden diese Impulse von den Transpondern 9' und 10' empfangen, so antworten die Transponder darauf mit dem Aussenden von Antwortsignalen. Im Mode-S-Betrieb, "S" steht hier für selektiv, enthält das von einer Bodenstation ausgesandte Abfragetelegramm eine Adresse, mit der ein bestimmtes Flugzeug (Transponder) gezielt angesprochen wird.

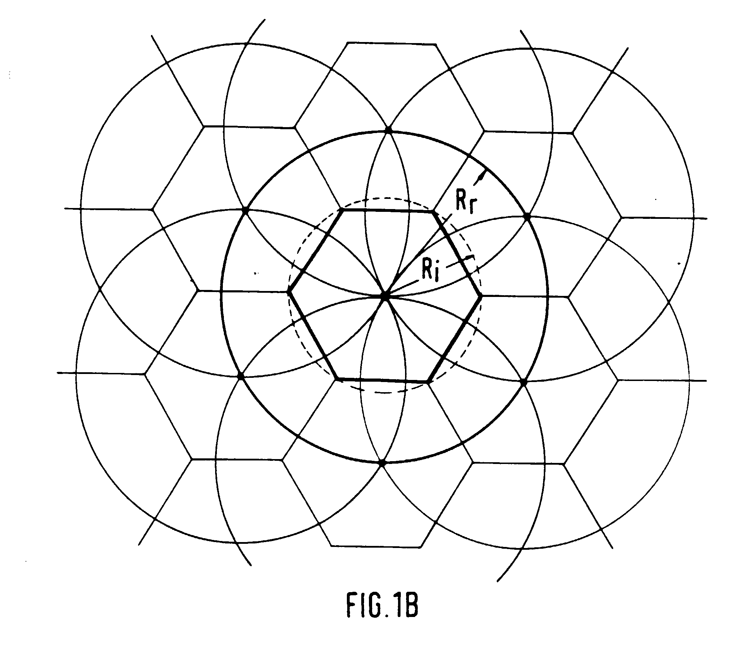

Fig. 1b gibt einen Überblick über die Größenverhältnisse der Zellen nach Fig. 1a. In dem hier beschriebenen Ausführungsbeispiel beträgt die Entfernung für aktive Abfragen Rᵢ einer Bodenstation 120 km, während die Empfangsreichweite Rᵣ doppelt so groß, also 240 km ist.

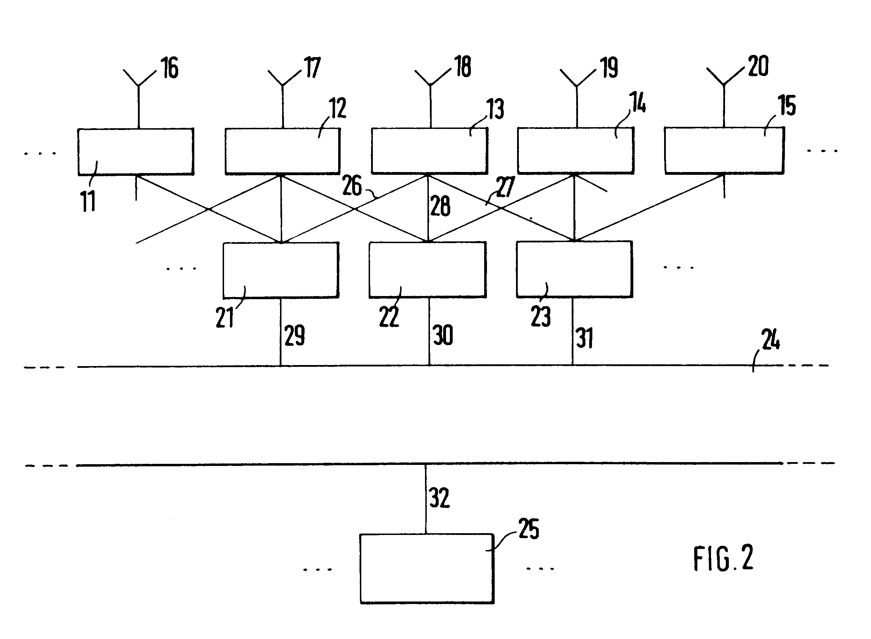

Fig. 2 zeigt eine schematische Darstellung der Systemarchitektur. Mit 11 bis 15 sind Abfrageeinrichtungen bezeichnet, wie sie sich in den Bodenstationen 5, 6, 7 oder 8 nach Fig. 1a befinden. Zu jeder Abfrageeinrichtung gehört eine Antenne, die zum Aussenden der Abfragetelegramme und zum Empfang der Antworttelegramme dient. Die Antennen sind mit 16 bis 20 bezeichnet. In den Abfrageeinrichtungen 11 bis 15 werden die Abfragetelegramme aufbereitet, und die Antworttelegramme verarbeitet. Jede Abfrageeinrichtung ist mit einem oder mehreren der Prozessoren 21, 22 oder 23 verbunden. Im Ausführungsbeispiel ist die Abfrageeinrichtung 13 über eine Leitung 26 mit dem Prozessor 21, über eine Leitung 28 mit dem Prozessor 22 und über eine Leitung 27 mit dem Prozessor 23 verbunden. Die Prozessoren selbst sind an eine gemeinsame Datenleitung 24 angeschlossen. Die gemeinsame Datenleitung 24 steht über eine Verbindungsleitung 32 mit einem Kontrollzentrum 25 in Verbindung. Das System nach Fig. 2 arbeitet wie folgt: Die auf den Flugzeugen 9 oder 10 befindlichen Transponder 9' oder 10' senden in Abständen zwischen 0,8 und 1,2 Sekunden Squittersignale aus, die in verschlüsselter Form die Identität des Flugzeuges enthalten. Wenn wenigstens drei auf Systemzeit synchronisierte Bodenstationen, beispielsweise die Bodenstationen 6, 7 und 8 in Fig. 1a, ein Squittersignal des Transponders 9' empfangen, ermitteln sie aus den Differenzen der Eintreffzeiten nach dem Hyperbelschnittverfahren grob den Standort des Transponders. Gemäß Fig. 1a befindet sich das Flugzeug 9 mit dem Transponder 9' in Zelle 4, in der sich die Bodenstation 8 befindet. Diese Zelle wird nun zur aktiven Zelle. Die zur Bodenstation gehörende Abfrageeinrichtung sendet ein an den Transponder 9' direkt gerichtetes Abfragetelegramm aus. Das Abfragetelegramm wird empfangen und nach Ablauf einer festen Verzögerungszeit antwortet der Transponder 9' mit dem Aussenden eines Antworttelegramms. Die Dauer zwischen dem Aussenden des Abfragetelegramms und dem Eintreffen des Antworttelegramms wird in der Bodenstation gemessen. Wegen der Kenntnis der Signalgeschwindigkeit und einer bekannten Verzögerungszeit im Transponder liefert diese Dauer den Abstand des Flugzeuges von der Bodenstation. In dem hier beschriebenen Ausführungsbeispiel befindet sich die Abfrageeinrichtung 11 aus Fig. 2 in der Bodenstation 8 nach Fig. 1a. Nach Ermittlung der Laufzeit oder der Entfernung gibt die Bodenstation 11 diese Information an mehrere Prozessoren, hier an den Prozessor 21, weiter. Die Abfrageeinrichtungen 11 bis 15 sind alle auf ein und dieselbe feste Systemzeit synchronisiert. Diese Systemzeit wird beispielsweise über geostationäre Satelliten übertragen.

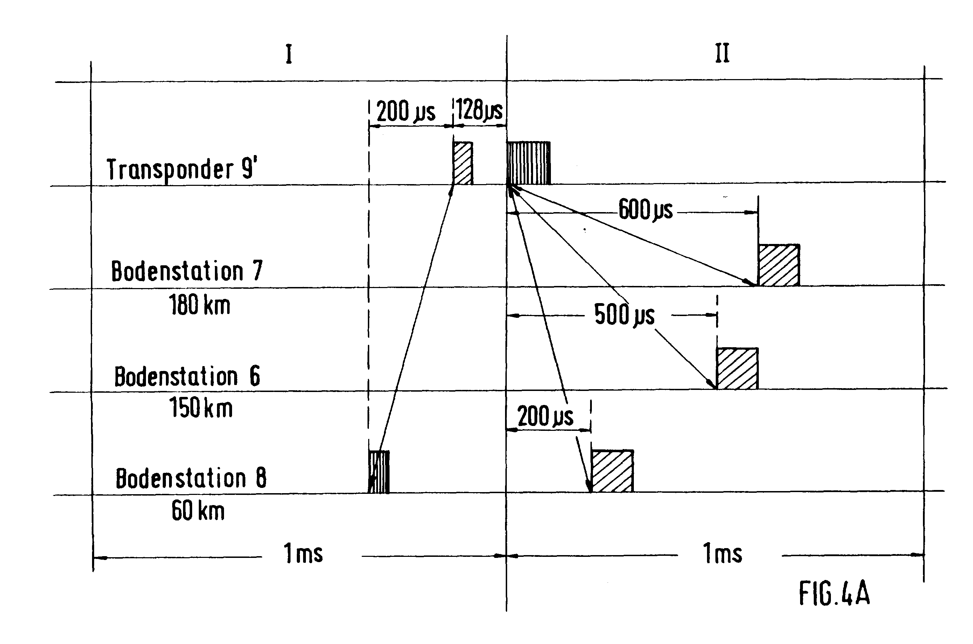

Fig. 4a zeigt einen aus den Teilen I und II bestehenden Rahmen zu zwei Millisekunden der allen Abfrageeinrichtungen gemeinsamen Systemzeit. Im Teil I senden die Bodenstationen, in Teil II empfangen sie. Zum Verständnis von Fig. 4a wird vorausgesetzt, daß die Bodenstation 8 in Zelle 4 nach Fig. 1a nach erfolgter Grobortung von Flugzeug 9 zur aktiven Bodenstation wird. Bodenstation 8 hat ein Abfrägetelegramm ausgesandt, und aus der Zeitdifferenz zwischen Aussenden des Abfragetelegramms und Eintreffen des Antworttelegramms eine Entfernung von 60 km zum Flugzeug 9 ermittelt. Mit Hilfe eines der Prozessoren 21, 22 oder 23 ist daraufhin der Zeitpunkt für das Aussenden eines Abfrageimpulses so gewählt worden, daß er 328 Mikrosekunden vom Beginn des Bereiches II des Zeitrahmens entfernt liegt. Die schwarzen Blöcke in Fig. 4a bezeichnen Sendeimpulse, die schraffierten eintreffende Empfangsimpulse. Bei den schmalen Blöcken handelt es sich um Telegramme, die von den Bodenstationen ausgesendet werden, bei den breiten Blöcken um Telegramme von den Transpondern. Die Laufzeit des von der Bodenstation 8 abgestrahlten Abfragetelegrammes beträgt 200 Mikrosekunden. Nach einer Verzögerungszeit von 128 Mikrosekunden, also exakt am Beginn von Teil II des Zeitrahmens sendet der Transponder 9' ein Antworttelegramm. Dieses Antworttelegramm erreicht die Bodenstation 8, die 60 km vom Transponder entfernt ist nach 200 Mikrosekunden. Dasselbe Antworttelegramm erreicht die Bodenstation 7, die 180 km entfernt ist, erst nach 600 Mikrosekunden. Und die Bodenstation 6, die 150 km entfernt ist, empfängt das Signal nach 500 Mikrosekunden. Durch die Wahl des Absendezeitpunktes für das Abfragetelegramm bei der Bodenstation 8 in der Art, daß das vom Transponder erzeugte Antwortsignal exakt an den Anfang von Teil II eines Zeitrahmens fällt, sind die Eintreffzeiten der Antwortsignale bei den Bodenstationen 6, 7 und 8 ein direktes Maß für den Abstand der Bodenstationen zu Transponder 9'. Die einzige aktive Bodenstation ist Bodenstation 8. Die Bodenstationen 6 und 7 empfangen nur passiv das Antworttelegramm. Einer der Prozessoren 21, 22 oder 23, dem die Entfernungen des Transponders 9' zu zwei Bodenstationen übermittelt werden, kann daraus sofort den Standort des Flugzeuges 9 in der Ebene, und mit der im Antworttelegramm enthaltenen Höhenangabe die Position des Flugzeuges im Raum bestimmen. Sendete der Transponder 9' sein Antworttelegramm nicht zum Beginn eines Zeitrahmens (oder zu einem festen Bezugspunkt innerhalb des Zeitrahmens), so müßten mindestens zwei Bodenstationen aktiv werden, um den genauen Standort des Flugzeuges angeben zu können.

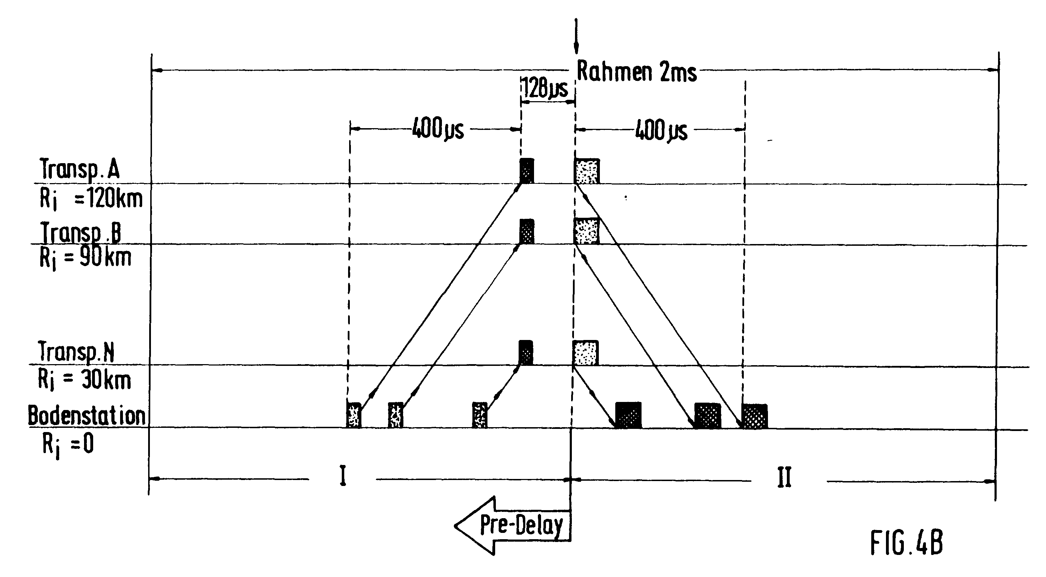

Fig. 4b zeigt eine Variante des in Fig. 4a beschriebenen Impulsdiagrammes. Diesmal befinden sich drei Flugzeuge im Einzugsbereich einer Bodenstation, was dieser durch die bereits beschriebene Grobortung mit Hilfe der Squittersignale bereits bekannt ist. Die Bodenstation hat in einem ersten Abfrageantwortzyklus die Abstände zu diesen Flugzeugen mit 120 km, 90 km und 30 km bestimmt. Daran anschließend sendet sie Abfrageimpulse an die Transponder, die 528 Mikrosekunden, 428 Mikrosekunden und 228 Mikrosekunden vor dem Beginn eines neuen Zeitrahmens liegen. Dadurch wird erreicht, daß alle drei Transponder ihre Antwortsignale exakt am Beginn des darauffolgenden Zeitrahmens aussenden. Die Eintreffzeiten der Antwortsignale an der Bodenstation sind jetzt direkt proportional zur Entfernung der drei Transponder. Das gilt für alle im Netz vorhandenen Bodenstationen. Damit reicht wiederum eine aktive Bodenstation aus, um die Standorte der Flugzeuge durch Messung der Eintreffzeiten zu bestimmen. Die von den Prozessoren berechneten Daten über die Standorte der Flugzeuge werden auf die gemeinsame Datenleitung 24 gegeben und stehen damit im Kontrollzentrum 25 zur Auswertung zur Verfügung.

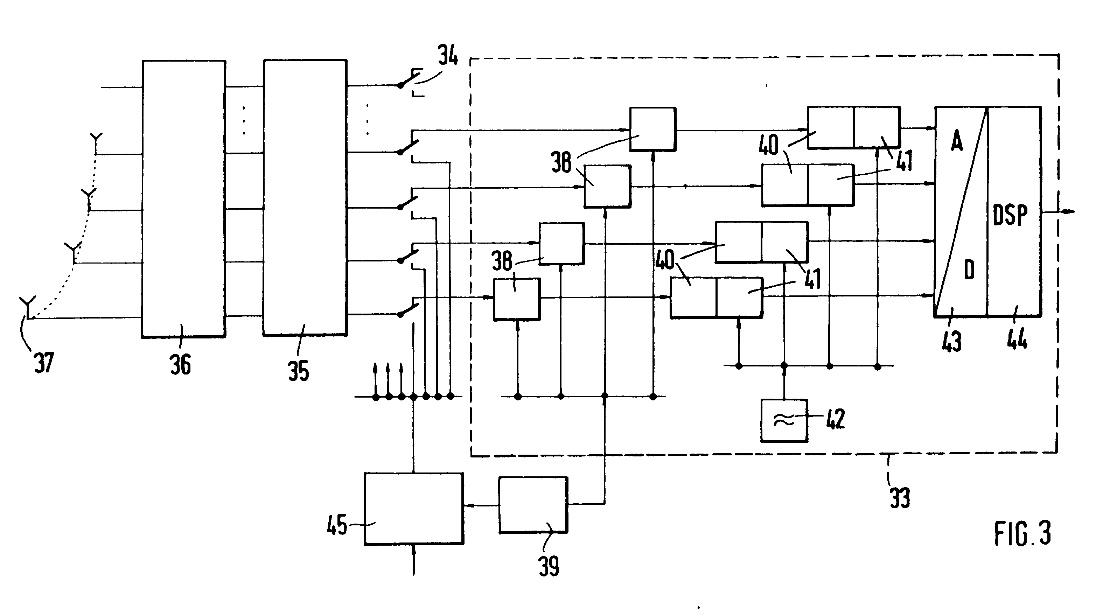

In Fig. 3 wird der Aufbau einer Bodenstation beschrieben. Mit 33 ist ein mehrkanaliger Empfänger bezeichnet, der über einen Satz von Schaltern 34, ein Koppelnetzwerk 35 und eine Buttlermatrix 36 mit einer aus 16 Strahlern bestehenden Antenne 37 verbunden ist. Die 16 Strahler der Antenne 37 sind auf einem Kreis von 1 bis 2m Durchmesser angeordnet. Im Empfänger 33 befinden sich 16 erste Mischer 38, von denen hier jedoch nur vier gezeichnet sind. Diese ersten Mischer 38 mischen das von der Antenne 37 stammende Signal mit dem Ausgangssignal eines Oszillators 39. Die gezeichnete Schalterstellung des Schalters 34 ist die Empfangsstellung. Die Ausgangssignale der ersten Mischer 38 gelangen auf Zwischenfrequenzstufen 40, deren Ausgangssignale anschließend in Mischern 41 mit dem Signal eines Oszillators 42 gemischt werden.

Die Ausgangssignale der Mischer 41 werden in einem Analog-Digital-Wandler 43 digitalisiert und einem digitalen Signalprozessor 44 zur Weiterverarbeitung zugeführt. Die Ausgangssignale des digitalen Signalprozessors 44 gelangen zur Weiterverarbeitung in einen oder mehrere der Prozessoren 21 bis 23. Im Sendebetrieb steht einer der Schalter 34 in der nicht gezeichneten Schaltstellung. In diesem Fall wird die Antenne 37 für die angeschaltete Richtung mit den Ausgangssignalen eines Senders 45 versorgt. Das Trägersignal für den Sender 45 ist das Ausgangssignal des Oszillators 39. Die Informationen, die der Sender abstrahlen soll, stammen aus einem der Prozessoren 21 bis 23. Das gesamte System kann nun so betrieben werden, daß ein Flugzeug, nachdem es geortet worden ist, in Verbindung mit derjenigen Bodenstation bleibt, deren Zelle es überfliegt. An der Zellengrenze erfolgt dann, vermittelt durch die Datenleitung 24, ein Handover von einer Bodenstation zu nächsten. Da in den Bodenstationen Antennen mit fächerartig überlappenden Richtdiagrammen verwendet werden, können jederzeit Informatioen zwischen Bodenstation und Transponder ausgetauscht werden. Die Beschränkung, die durch eine rotierende, scharf bündelnde Antenne auferlegt wird, entfällt.

Das beschriebene Sekundär-Radarsystem läßt sich auch dazu verwenden, Flugzeuge über die Entfernung zu anderen in der Luft befindlichen Flugzeugen zu unterrichten. Die ist unter dem Namen Airborne Collision Avoidance System = ACAS bekannt. Vorausgesetzt wird hier, daß ein Flugzeug mit Hilfe der Squittersignale grob geortet wurde. Daraufhin hatte die Bodensation, in deren Zelle sich das Flugzeug befindet, ein Abfragesignal so ausgesandt, daß das vom Flugzeug ausgestrahlte Antwortsignal in den gemeinsamen Systemzeitrahmen fällt. Da nicht nur die Bodenstationen, sondern auch die Transponder auf die gemeinsame Systemzeit synchronisiert sind, genügt die Auswertung der Eintreffzeit der von dem aktivierten Transponder ausgesandten Antwortsignale in anderen Flugzeugen, um deren Abstand von dem den Transponder tragenden Flugzeug zu bestimmen.

## Patentansprüche

1. Sekundär-Radarsystem für den Mode-S-Betrieb mit mehreren, am Boden befindlichen Abfrageeinrichtungen (11, 12, ...), die über Antennen (16, 17, ...) Abfragesignale aussenden und Antwortsignale empfangen und untereinander auf eine Systemzeit mit einem festen Zeitrahmen synchronisiert sind, und mit Bordstationen (9', 10'), die neben Squittersignalen, die die Identität eines mit der Bordstation verbundenen Luftfahrzeuges oder Flugkörpers enthalten, auf empfangene Abfragesignale Antwortsignale aussenden, und mit Meßmitteln in den Abfrageeinrichtungen, die Signallaufzeiten zwischen dem Senden von Abfragesignalen und dem Empfang von Antwortsignalen messen,
**dadurch gekennzeichnet,** daß die Abfrageeinrichtungen miteinander verbunden sind und Steuermittel enthalten, die nach Messen der Signallaufzeit von einer Abfrageeinrichtung zu einer Bordstation (9', 10') und zurück den Zeitpunkt zum Senden weiterer Abfrageimpulse so bestimmen, daß das von der Bordstation gesendete Antwortsignal in einen definierten Punkt des Systemzeitrahmens fällt, und ferner Rechenmittel, die aus von wenigstens drei Abfrageeinrichtungen gemessenen Eintreffzeiten von Antwortsignalen oder Squittersignalen derselben Bordstation den Ort der Bordstation mittels eines Hyperbelschnittverfahrens bestimmen.

2. Sekundär-Radarsystem nach Anspruch 1, gekennzeichnet durch ein zellular aufgebautes Netz von Abfrageeinrichtungen mit je einer Abfrageeinrichtung pro Zelle und Antennen an den Abfrageeinrichtungen, die aus einer Vielzahl von Strahlern bestehen, die über ein oder mehrere Netzwerke derart gespeist werden, daß in der Horizontalebene ein Fächer von sich überlappenden Diagrammen entsteht.

3. Sekundär-Radarsystem nach Anspruch 3, dadurch gekennzeichnet, daß diejenige Abfrageeinrichtung (8) Abfragesignale sendet, in deren Zelle (4) sich die Bordstation (9') befindet.

4. Sekundär-Radarsystem nach einem der vorstehenden Ansprüche, dadurch gekennzeichnet, daß die Abfrageeinrichtungen mit Hilfe geostationärer Satelliten auf die Systemzeit synchronisiert sind.

5. Sekundär-Radarsystem nach einem der vorstehenden Ansprüche, dadurch gekennzeichnet, daß in jeder Bordstation (9', 10') Rechenmittel vorhanden sind, die aus im Systemzeitrahmen abgestrahlten Antwortimpulsen Entfernungen berechnen.

6. Sekundär-Radarsystem nach einem der vorstehenden Ansprüche, dadurch gekennzeichnet, daß mindestens eine zusätzliche Abfrageeinrichtung vorgesehen ist, die die Entfernung zu einer Bordstation, deren Ort bereits durch wenigstens drei andere Abfrageeinrichtungen bestimmt wurde, mißt und abhängig von dem Unterschied zwischen der gemessenen Entfernung und einem aus den Koordinaten des Ortes der Bordstation und der zusätzlichen Abfrageeinrichtung berechneten Entfernungswert einen zeitlichen Korrekturwert ermittelt, der die Abweichung einer zwischen Empfang eines Abfragesignals und Aussenden eines Antwortsignals in der Bordstation ablaufenden Zeitspanne von einem für diese Zeitspanne vorgegebenen Wert wiedergibt.

7. Sekundär-Radarsystem nach Anspruch 6, dadurch gekennzeichnet, daß die Abfrageeinrichtungen bis auf eine, reine Empfangseinrichtungen sind oder als solche arbeiten.

8. Sekundär-Radarsystem nach Anspruch 6 oder 7, dadurch gekennzeichnet, daß aus dem von der zusätzlichen Abfrageeinrichtung ermittelten Entfernungswert einer bereits durch wenigstens drei andere Abfrageeinrichtungen georteten Bordstation die Höhe des mit der Bordstation verbundenen Luftfahrzeuges oder Flugkörpers berechnet wird.

## Claims

1. A secondary radar system for Mode S operation, comprising a plurality of ground-based interrogators (11, 12, ...), which transmit interrogation signals and receive reply signals via antennas (16, 17, ...) and are synchronized to a system time with a fixed time frame, airborne stations (9', 10'), which, besides sending out squitter signals which contain the identity of an aircraft or flying object connected with the airborne station, transmit reply signals in response to received interrogation signals, and measuring means in the interrogators for measuring signal transit times between the transmission of interrogation signals and the reception of reply signals,
**characterized in** that the interrogators are connected with one another and include control means which, after measurement of the signal transit time from an interrogator to an airborne station (9', 10') and return, determine the time of tranmission of further interrogation pulses in such a way that the reply signal transmitted by the airborne station will fall into a defined point of the system time frame, and that the interrogators further include computing means which determine from arrival times of reply signals or squitter signals of the same airborne station measured by at least three interrogators the position of the airborne station using a hyperbolic fixing scheme.

2. A secondary radar system as claimed in claim 1, characterized by a cellular network of interrogators with one interrogator per cell and antennas at the interrogators which consist of a plurality of radiating elements which are fed via one or more networks in such a way that a fan of overlapping radiation patterns is produced in the horizontal plane.

3. A secondary radar system as claimed in claim 3, characterized in that interrogation signals are transmitted by that interrogator (8) in whose cell (4) the airborne station (9') is located.

4. A secondary radar system as claimed in any one of the preceding claims, characterized in that the interrogators are synchronized to the system time with the aid of geostationary satellites.

5. A secondary radar system as claimed in any one of the preceding claims, characterized in that each airborne station (9', 10') includes computing means for computing distances from reply pulses radiated within the system time frame.

6. A secondary radar system as claimed in any one of the preceding claims, characterized in that at least one additional interrogator is provided which measures the distance to an airborne station whose position was already determined by at least three other interrogators, and, based on the difference between the measured distance and a distance value computed from the coordinates of the positions of the airborne station and the additional interrogator, determines a temporal correction value which represents the deviation of an elapsed time between receipt of an interrogation signal and transmission of a reply signal from a predetermined value.

7. A secondary radar system as claimed in claim 6, characterized in that all interrogators but one are pure receiver units or operate as pure receiver units.

8. A secondary radar system as claimed in claim 6 or 7, characterized in that from the distance value determined by the additional interrogator for an airborne station already located by at least three other interrogators, the altitude of the aircraft or flying object connected with the airborne station is computed.

## Revendications

1. Système radar secondaire pour l'exploitation en mode S comportant plusieurs dispositifs d'interrogation (11, 12,...) se trouvant au sol, qui émettent des signaux d'interrogation par l'intermédiaire d'antennes (16, 17, ...) et reçoivent des signaux de réponse et qui sont synchronisés entre eux sur un temps de système avec un cadre temporel fixe, et comportant des stations de bord 9', 10') qui, à côte des signaux de déclenchement intempestif du transpondeur contenant l'identité d'un aéronef ou d'un missile relié a la station de bord, émettent des signaux de réponse à des signaux d'interrogation reçus, et comportant des moyens de mesure dans les dispositifs d'interrogation qui mesurent les temps de propagation des signaux entre l'envoi des signaux d'interrogation et la réception des signaux de réponse, caractérisé en ce que les dispositifs d'interrogation sont reliés entre eux et comprennent des moyens de commande qui, après mesure du temps de propagation des signaux d'un dispositif d'interrogation à une station de bord (9', 10') et retour, déterminent le moment de l'envoi d'autres impulsions d'interrogation de sorte que le signal de réponse envoyé de la station de bord tombe dans un point défini du cadre temporel du système, et comprennent également des moyens de calcul qui déterminent le lieu de la station de bord au moyen d'une méthode des sections hyperboliques à partir des temps d'arrivée de signaux de réponses et de signaux de déclenchement intempestif du transpondeur de cette même station de bord mesurés à partir d'au moins trois dispositifs d'interrogation.

2. Système de radar secondaire selon la revendication 1, caractérisé par un réseau, de structure cellulaire, de dispositifs d'interrogation comportant chacun un dispositif d'interrogation par cellule et des antennes se trouvant au niveau des dispositifs à interrogation, se composant d'une multiplicité d'éléments rayonnants, qui sont alimentés par l'intermédiaire d'un ou de plusieurs réseaux de telle manière qu'il en résulte dans le plan horizontal un éventail de diagrammes se superposant.

3. Système de radar secondaire selon la revendication 2, caractérisé en ce que ledit dispositif d'interrogation (8) envoie des signaux d'interrogation, dans la cellule (4) desquels se trouve la station de bord (9').

4. Système de radar secondaire selon l'une des revendications précédentes, caractérisé en ce que les dispositifs d'interrogation sont synchronisés sur le temps de système a l'aide de satellites géostationnaires.

5. Système radar secondaire selon l'une des revendications précédentes, caractérisé en ce que dans chaque station de bord (9', 10') des moyens de calcul sont présents, qui calculent des distances à partir d'impulsions de réponse émises dans le cadre temporel du système.

6. Système radar secondaire selon l'une des revendications précédentes, caractérisé en ce qu'il est prévu au moins un dispositif d'interrogation supplémentaire, qui mesure la distance par rapport à une station de bord, dont le lieu a déjà été déterminé par au moins trois autres dispositifs d'interrogation, et établit, en fonction de la différence existant entre la distance mesurée et une valeur de distance calculée à partir des coordonnées du lieu de la station de bord et du dispositif d'interrogation supplémentaire, une valeur de correction temporaire qui reproduit l'écart d'un intervalle de temps, s'écoulant dans la station de bord entre la réception d'un signal d'interrogation et l'envoi d'un signal de réponse, d'une valeur prédéfinie pour cet intervalle de temps.

7. Système de radar secondaire selon la revendication 6, caractérisé en ce que les dispositifs d'interrogation, à l'exception d'un, sont des dispositifs de réception ou fonctionnent en tant que tels.

8. Système de radar secondaire selon la revendication 6 ou 7, caractérisé en ce que la hauteur de l'aéronef ou du missile relié à la station de bord est calculée à partir de la valeur de distance établie par le dispositif d'interrogation supplémentaire d'une station de bord déjà repérée par au moins trois autres dispositifs d'interrogation.
